# EUROPÄISCHE PATENTSCHRIFT

(11) **EP 0 800 625 B1**
(45) Veröffentlichungstag und Bekanntmachung des Hinweises auf die Patenterteilung: **22.03.2000**
(21) Anmeldenummer: 96937283.8
(22) Anmeldetag: 29.10.1996
(51) Int. Cl.: F16H 59/04

(54) **VORRICHTUNG ZUM SCHALTEN VON KRAFTFAHRZEUG-WECHSELGETRIEBEN**
DEVICE FOR SWITCHING MOTOR VEHICLE GEAR CHANGE BOXES
DISPOSITIF POUR COMMUTER DES BOITES DE VITESSES D'AUTOMOBILES

(30) Priorität: 02.11.1995 DE 19540897
(43) Veröffentlichungstag der Anmeldung: 15.10.1997
(73) Patentinhaber: United Parts FHS Automobil Systeme Gmbh, 37586 Dassel (DE)
(72) Erfinder: MEYER, Klemens, D-37586 Dassel (DE)
(74) Vertreter: Oedekoven, Wolf-Dieter, Dipl.-Ing.
(86) Internationale Anmeldenummer: EP9604697
(87) Internationale Veröffentlichungsnummer: WO9716661

(56) Entgegenhaltungen:
- EP-A- 0 585 516
- DE-A- 4 240 188
- DE-A- 4 341 750
- GB-A- 1 368 269

## Beschreibung

Die Erfindung bezieht sich auf eine Vorrichtung zum Schalten von Kraftfahrzeug-Wechselgetrieben mit einem manuell betätigbaren Schalthebel, welcher mit der Getriebeschaltwelle über ein Gestänge mit einem auf einem kraftfahrzeugfesten Lagerbolzen angeordneten zweiarmigen Schwenkhebel zusammenwirkt.

Derartige Vorrichtungen sind bekannt (DE 39 25 448 C2 und DE 43 41 750 A1). Dabei ist der vom Boden des jeweiligen Kraftfahrzeugs nach oben ragende Schalthebel durch eine Schaltstange mit dem einen Arm des zweiarmigen Schwenkhebels verbunden, welcher am Kraftfahrzeug um einen vertikalen Bolzen schwenkbar gelagert ist und dessen zweiter Arm mit der Schaltwelle des Wechselgetriebes des Kraftfahrzeugs verbunden ist. Die Schaltstange und die Getriebeschaltwelle sind ferner durch eine Koppelstange miteinander verbunden, welche einerseits an einem radialen Arm der Schaltstange und andererseits an einem radialen Arm der Getriebeschaltwelle angreift (DE 39 25 448 C2). Statt dessen können die Schaltstange und die Getriebeschaltwelle aber auch durch zwei an den beiden Enden des zweiarmigen Schwenkhebels kugelgelenkartig gelagerte, von einem endlosen Spannband umschlungene Wippen zusätzlich miteinander verbunden sein (DE 43 41 750 A1).

Der Schalthebel kann manuell sowohl in Kraftfahrzeugquerrichtung als auch in Kraftfahrzeuglängsrichtung verschwenkt werden. Das Verschwenken in Kraftfahrzeugquerrichtung erfolgt zur Gassenwahl. Dabei wird die Schaltstange gedreht, welche ihrerseits über die Koppelstange bzw. über die beiden Wippen und das Spannband die Getriebeschaltschaltwelle in derselben Richtung dreht. Das Verschwenken in Kraftfahrzeuglängsrichtung erfolgt zum Gangeinlegen und Gangausrücken. Dabei wird die Schaltstange axial verschoben, welche ihrerseits über den Schwenkhebel die Getriebeschaltwelle in der entgegengesetzten Richtung axial verschiebt, wobei der Schwenkhebel sich um seinen Lagerbolzen entsprechend dreht.

Der Erfindung liegt die Aufgabe zugrunde, eine Vorrichtung der eingangs angegebenen Art zu schaffen, bei welcher der Schwenkhebel auf einfache und kostengünstige Weise so gelagert ist, daß Schwingungen wirkungsvoll gedämpft werden, trotzdem aber eine sehr genaue Übertragung der Bewegungen des Schalthebels über den Schwenkhebel auf die Getriebeschaltwelle gewährleistet ist, und jegliches Axialspiel ohne weiteres ausgeschaltet sowie ein außerordentlich geringes Reibmoment der Lagerung ohne besonderen Aufwand erzielt werden kann.

Diese Aufgabe ist erfindungsgemäß dadurch gelöst, daß der Schwenkhebel mit zwei identischen Lagerbuchsen aus elastischem Material versehen ist, welche in die Bohrung einer Nabe des Schwenkhebels eingesetzt sind und jeweils aufweisen:
a) eine zylindrische Innenhülse zur Aufnahme des Lagerbolzens,
b) einen ersten Kranz von scheibenförmigen Stützzungen, welche von der Innenhülse schräg abstehen, um jeweils einen spitzen Winkel mit der durch die Zungenwurzel velaufenden Radialebene der Innenhülse einzuschließen, und welche jeweils mit ihrer zur Längsachse der Innenhülse parallelen Außenkante an der Bohrung der Nabe anliegen, und
c) einen zweiten Kranz von scheibenförmigen Anschlagzungen, welche von der Innenhülse radial abstehen und deren Außenkanten jeweils zur progressiven Anlage an der Bohrung der Nabe vom einen Außenkantenende zum anderen Außenkantenende konvex gewölbt sind.

Vorteilhafte Weiterbildungen der erfindungsgemäßen Vorrichtung sind in den Patentansprüchen 2 bis 15 gekennzeichnet.

Nachstehend sind zwei Ausführungsformen der erfindungsgemäßen Vorrichtung anhand von Zeichnungen beispielsweise beschrieben. Darin zeigt:
Fig. 1 schematisch und perspektivisch eine erfindungsgemäße Vorrichtung;
Fig. 2 perspektivisch und teilweise geschnitten eine erste Ausführungsform des Schwenkhebels der Vorrichtung nach Fig. 1 in größeren Maßstab;
Fig. 3 die Draufsicht in Richtung des Pfeils III in Fig. 2;
Fig. 4 den Längsschnitt entlang der Linie IV-IV in Fig. 3;
Fig. 5 den Querschnitt entlang der Linie V-V in Fig. 3;
Fig. 6 perspektivisch und teilweise geschnitten den Schwenkhebel nach Fig. 2 bis 5 ohne Lagerbuchsen;
Fig. 7 die Draufsicht in Richtung des Pfeils VII in Fig. 6;
Fig. 8 den Längsschnitt entlang der Linie VIII-VIII in Fig. 7;
Fig. 9 den Querschnitt entlang der Linie IX-IX in Fig. 7;
Fig. 10 perspektivisch eine der Lagerbuchsen des Schwenkhebels nach Fig. 2 bis 5;
Fig. 11 die Draufsicht in Richtung des Pfeils XI in Fig. 10;
Fig. 12 den Längsschnitt entlang der Linie XII-XII in Fig. 11;
Fig. 13 den Längsschnitt entlang der Linie XIII-XIII in Fig. 11;
Fig. 14 perspektivisch eine zweite Ausführungsform des Schwenkhebels der Vorrichtung nach Fig. 1 in größerem Maßstab;
Fig. 15 die Draufsicht in Richtung des Pfeils XV in Fig. 14;
Fig. 16 den Längsschnitt entlang der Linie XVI-XVI in Fig. 15;
Fig. 17 perspektivisch und teilweise geschnitten den Schwenkhebel nach Fig. 14 bis 16 ohne Lagerbuchsen;
Fig. 18 die Draufsicht in Richtung des Pfeils XVIII in Fig. 17;
Fig. 19 den Längsschnitt entlang der Linie XIX-XIX in Fig. 18;
Fig. 20 den Querschnitt entlang der Linie XX-XX in Fig. 18;
Fig. 21 perspektivisch eine der Lagerbuchsen des Schwenkhebels nach Fig. 14 bis 16;
Fig. 22 die Draufsicht in Richtung des Pfeils XXII in Fig. 21;
Fig. 23 den Längsschnitt entlang der Linie XXlll-XXlll in Fig. 22;
Fig. 24 den Längsschnitt entlang der Linie XXIV-XXIV in Fig. 22;
Fig. 25 die Seitenansicht in Richtung des Pfeils XXV in Fig. 22.

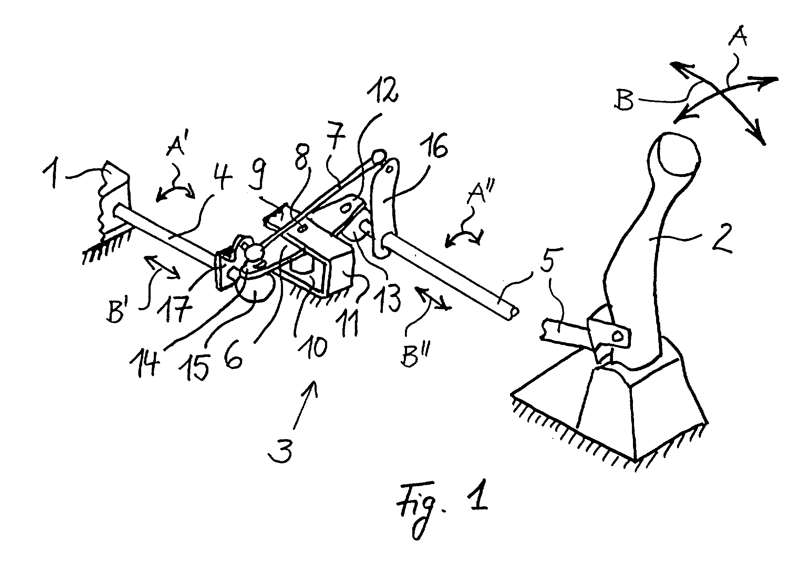

Die in Fig. 1 dargestellte Vorrichtung dient zum Schalten des Wechselgetriebes 1 eines Kraftfahrzeugs und weist einen vom Kraftfahrzeugboden nach oben ragenden Schalthebel 2 auf, welcher manuell verschwenkbar ist, und zwar zur Gassenwahl in Kraftfahrzeugquerrichtung, wie der Doppelpfeil A veranschaulicht, und zum Gangeinlegen sowie Gangausrücken in Kraftfahrzeuglängsrichtung, wie der Doppelpfeil B verdeutlicht, um über ein Gestänge 3 die Schaltwelle 4 des Wechselgetriebes 1 in Richtung des Doppelpfeils A' gleichsinnig zu drehen bzw. in Richtung des Doppelpfeils B' gegensinnig axial zu verschieben.

Das Gestänge 3 besteht aus einer Schaltstange 5, einem zweiarmigen Schwenkhebel 6 und einer Koppelstange 7. Der Schwenkhebel 6 ist auf einem vertikalen Bolzen 8 zwischen zwei zueinander parallelen, kraftfahrzeugfesten Tragarmen 9, 10 drehbar gelagert, welche von den beiden Schenkeln eines am Kraftfahrzeug befestigten U-förmigen Trägers 11 gebildet sind. Mit dem einen Arm 12 des zweiarmigen Schwenkhebels 6 ist über ein Kugelgelenk 13 das eine Ende der Schaltstange 5 verbunden, deren anderes Ende an den Schalthebel 2 angeschlossen ist. Mit dem anderen Arm 14 des zweiarmigen Schwenkhebels 6 ist über ein Kugelgelenk 15 das äußere Ende der Getriebeschaltwelle 4 verbunden. Die Koppelstange 7 ist am einen Ende mit einem radialen Arm 16 der Schaltstange 5 und am anderen Ende mit einem radialen Arm 17 der Getriebeschaltwelle 4 gelenkig verbunden.

Beim Verschwenken des Schalthebels 2 in Richtung des Doppelpfeils A nach links drehen sich die Schaltstange 5 in Richtung des Doppelpfeils A" nach links und die Getriebeschaltwelle 4 in Richtung des Doppelpfeils A' nach links. Beim Verschwenken des Schalthebels 2 in Richtung des Doppelpfeils A nach rechts drehen sich die Schaltstange 5 in Richtung des Doppelpfeils A" nach rechts und die Getriebeschaltwelle 4 in Richtung des Doppelpfeils A' nach rechts. Beim Verschwenken des Schalthebels 2 in Richtung des Doppelpfeils B nach vorne auf das Wechselgetriebe 1 zu verschieben sich die Schaltstange 5 in Richtung des Doppelpfeils B" axial nach vorne und die Getriebeschaltwelle 4 in Richtung des Doppelpfeils B' axial nach hinten vom Wechselgetriebe 1 weg, wobei der Schalthebel 6 sich entgegen dem Uhrzeigersinn dreht. Beim Verschwenken des Schalthebels 2 in Richtung des Doppelpfeils B nach hinten verschieben sich die Schaltstange 5 in Richtung des Doppelpfeils B" axial nach hinten und die Getriebeschaltwelle 4 in Richtung des Doppelpfeils B' axial nach vorne, wobei der Schwenkhebel 6 sich im Uhrzeigersinn dreht.

Der zweiarmige Schwenkhebel 6 besteht aus einer die beiden Arme 12, 14 bildenden Platte 18 aus Stahl, einer Nabe 19 aus glasfaserverstärktem Polyamid 66 und zwei identischen Lagerbuchsen 20 aus elastischem Material, nämlich dem unter dem Handelsnamen " Hytrel 5556 " bekannten Kunststoff, einem thermoplastischen Elastomeren auf Polyesterbasis, welches gute Gleiteigenschaften vermittelt. Die Platte 18 ist in die Nabe 19 eingebettet und mit den beiden Kugelköpfen 21, 22 aus Stahl des Kugelgelenks 13 für die Schaltstange 5 bzw. des Kugelgelenks 15 für die Getriebeschaltwelle 4 versehen. Die beiden Lagerbuchsen 20 sind in die Bohrung 23 der Nabe 19 eingesetzt.

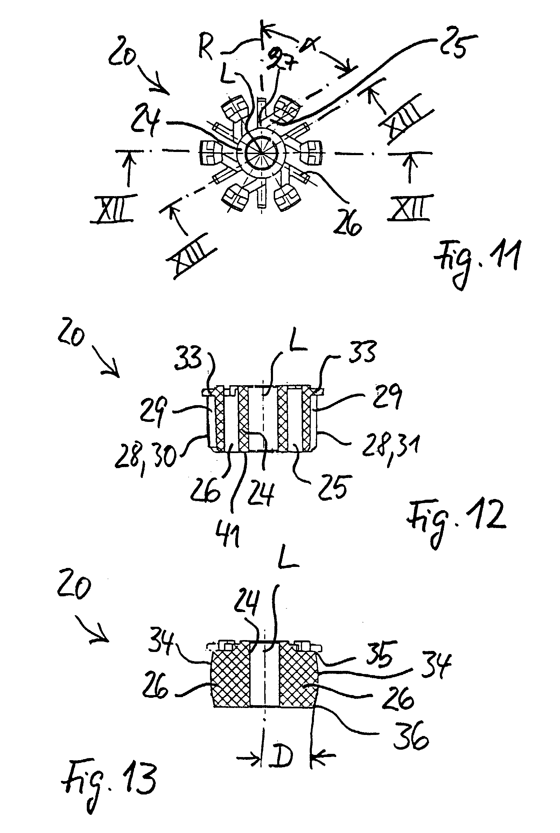

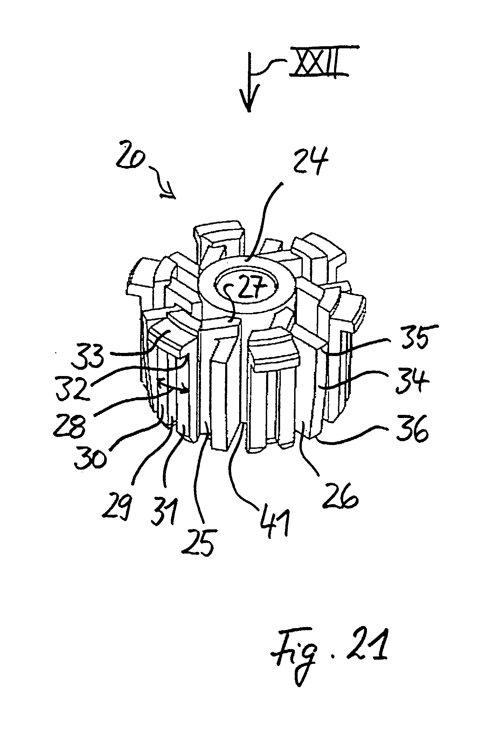

Jede Lagerbuchse 20 weist eine mittlere Innenhülse 24 und einen ersten Kranz von sechs scheibenförmigen Stützzungen 25 sowie einen zweiten Kranz von sechs scheibenförmigen Anschlagzungen 26 auf. Die gleichmäßig um die zylindrische Innenhülse 24 herum verteilten Stützzungen 25 stehen von der Innenhülse 24 schräg ab, um jeweils einen spitzen Winkel a mit der durch die Zungenwurzel 27 verlaufenden Radialebene R der Innenhülse 24 einzuschließen, wie aus Fig. 11 und 22 besonders deutlich ersichtlich. Die gleichmäßig um die zylindrische Innenhülse 24 herum verteilten Anschlagzungen 26 stehen von der Innenhülse 24 radial ab und erstrecken sich in denjenigen Radialebenen R der Innenhülse 24, welche durch die Wurzeln 27 der Stützzungen 25 verlaufen, wie ebenfalls aus Fig.11 und 22 besonders deutlich hervorgeht.

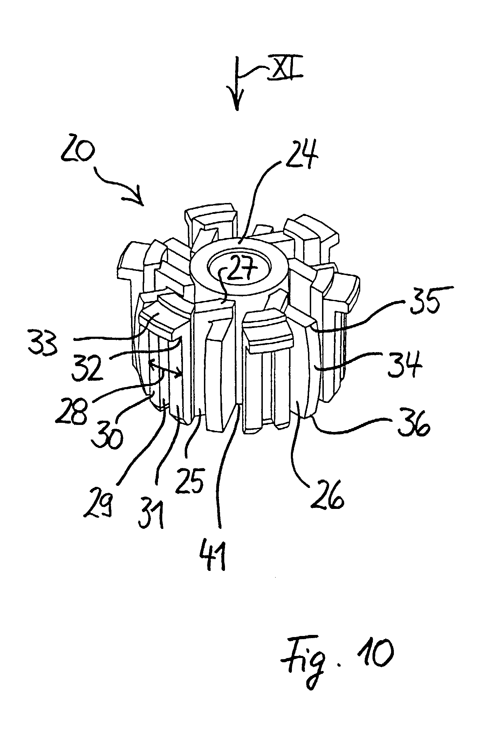

Die Stützzungen 25 jeder Lagerbuchse 20 weisen jeweils eine zur Längsachse L der zylindrischen Innenhülse 24 parallele Außenkante 28 und eine äußere Längsnut 29 auf, welche ebenfalls parallel zur Längsachse L der Innenhülse 24 verläuft und die konzentrisch zur Längsachse L der Innenhülse 24 gewölbte Außenkante 28 in zwei Längsabschnitte 30, 31 teilt. Außerdem sind die Stützzungen 25 jeder Lagerbuchse 20 jeweils oberhalb des in Fig. 10, 12 und Fig. 21,23 oberen Endes 32 der Außenkante 28 mit einem radialen Außenvorsprung 33 versehen. Die Anschlagzungen 26 jeder Lagerbuchse 20 erstrecken sich mittig zwischen den Außenkanten 28 der jeweiligen Stützzungen 25 und weisen jeweils eine Außenkante 34 auf, welche von ihrem in Fig. 10, 13 und Fig. 21, 24 oberen Ende 35 zu ihrem in Fig. 10, 13 und Fig. 21, 24 unteren Ende 36 konvex gewölbt ist.

Die Nabe 19 des Schwenkhebels 6 ist mit einem Kranz von sechs inneren Längsvorsprüngen 37 versehen, welche entlang des Umfangs der Bohrung 23 der Nabe 19 gleichmäßig verteilt sind. Weiterhin weist die Nabe 19 sechs federnde radiale Innenarme 38, 39 bzw. sechs starre radiale Innenarme 40 auf, welche ebenfalls entlang des Umfangs der Bohrung 23 der Nabe 19 gleichmäßig verteilt und gegenüber den inneren Längsvorsprüngen 37 um 30° in Bohrungsumfangsrichtung versetzt sind, so daß sich in der Mitte zwischen jedem Paar einander benachbarter innerer Längsvorsprünge 37 ein federnder Innenarm 38 oder 39 bzw. ein starrer Innenarm 40 radial erstreckt.

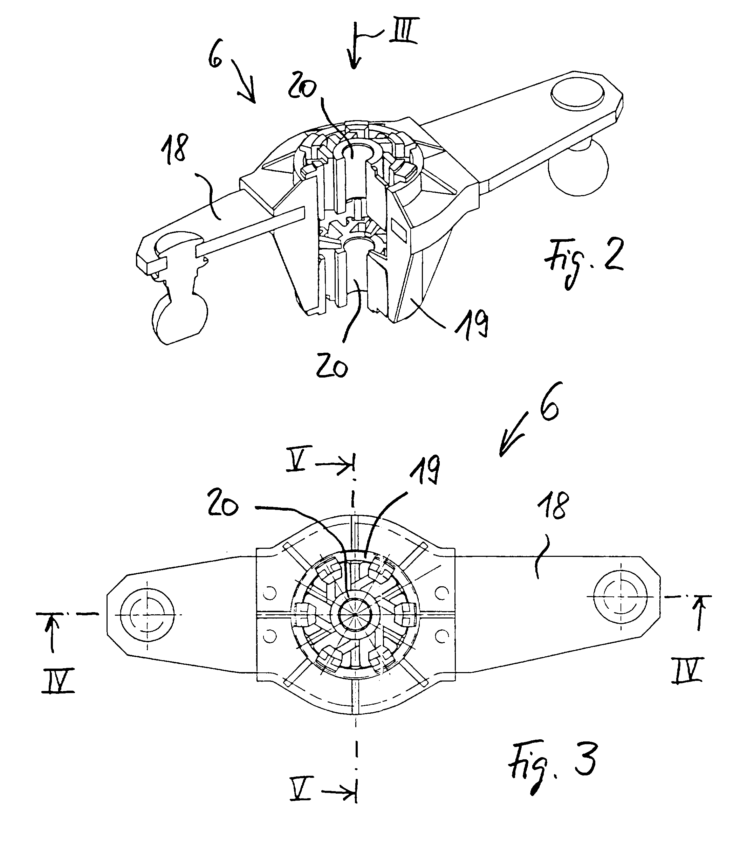

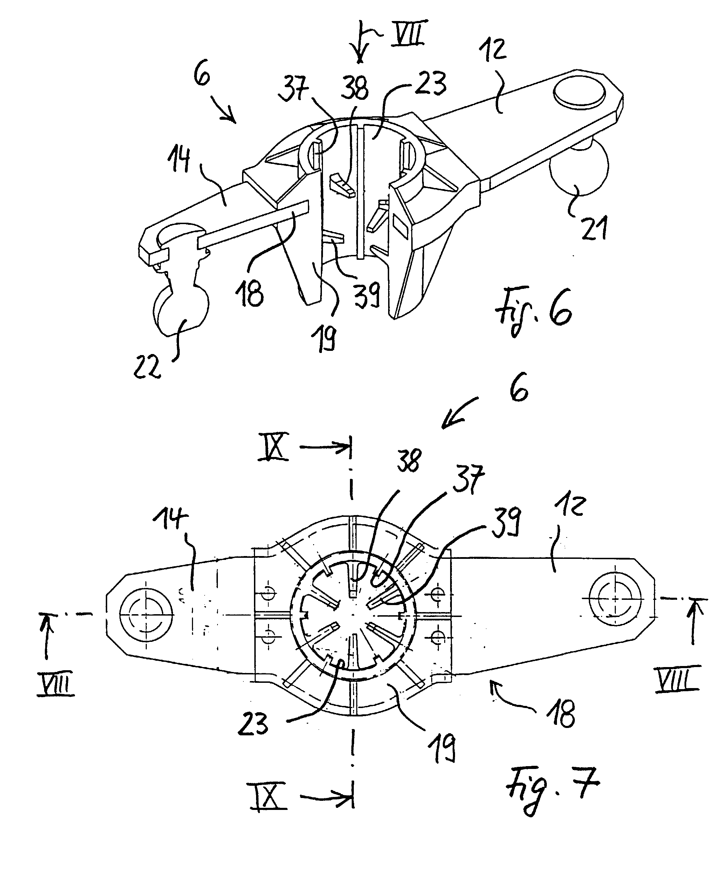

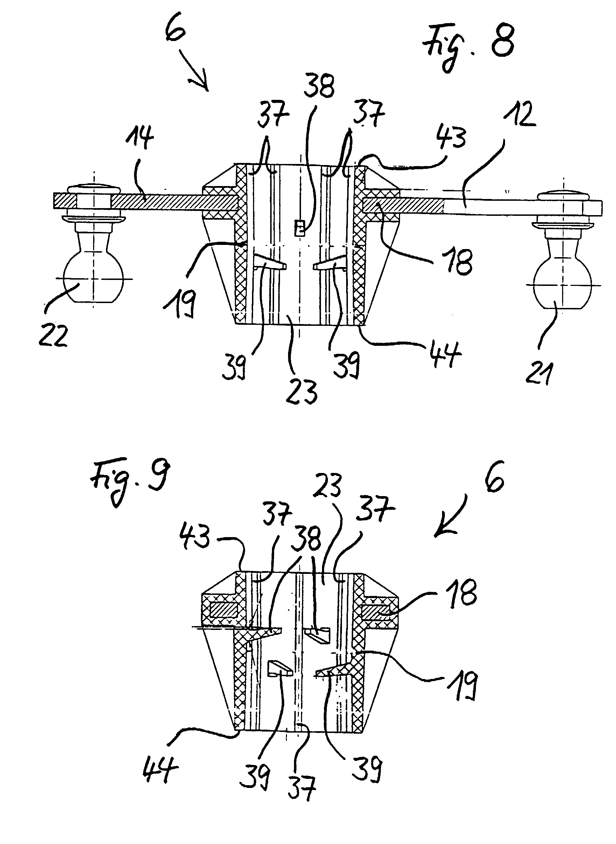

Beim Schwenkhebel 6 nach Fig. 2 bis 9 hat die Nabe 19 einen oberen Kranz von drei radialen Innenarmen 38, welche über den Umfang der Bohrung 23 der Nabe 19 gleichmäßig verteilt und in Nabenlängsrichtung nachgiebig sind, nämlich sich elastisch nach unten biegen können, und einen unteren Kranz von drei radialen Innenarmen 39, welche über den Umfang der Bohrung 23 der Nabe 19 gleichmäßig verteilt und in Nabenlängsrichtung nachgiebig sind, nämlich sich elastisch nach oben biegen können. Die Außenkanten 34 der Anschlagzungen 26 jeder Lagerbuchse 20 gemäß Fig. 10 bis 13 für den Schwenkhebel 6 nach Fig. 2 bis 9 sind jeweils derart konvex gewölbt, daß sich der Abstand D von der Längsachse L der Innenhülse 24 vom oberen Außenkantenende 35 zum unteren Außenkantenende 36 zunächst vergrößert und dann wieder verringert, wie sich besonders deutlich aus Fig. 13 ergibt.

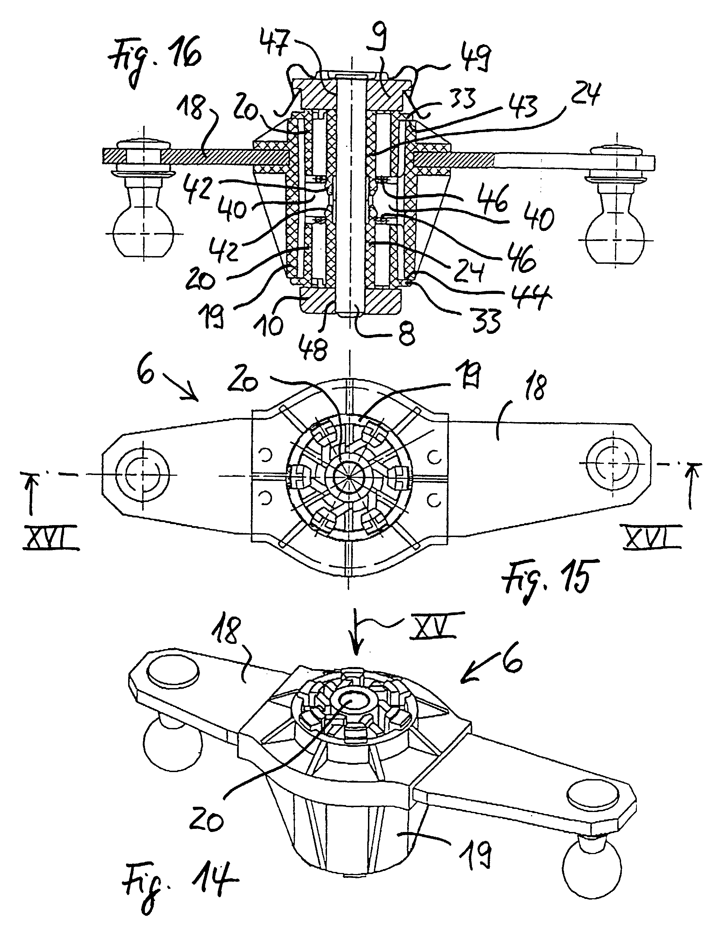

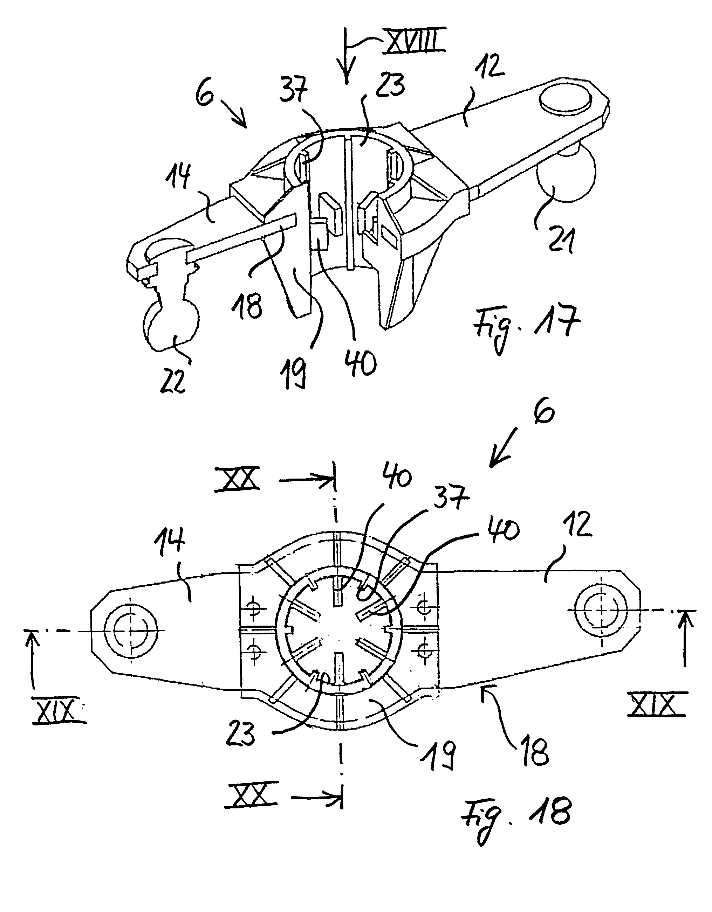

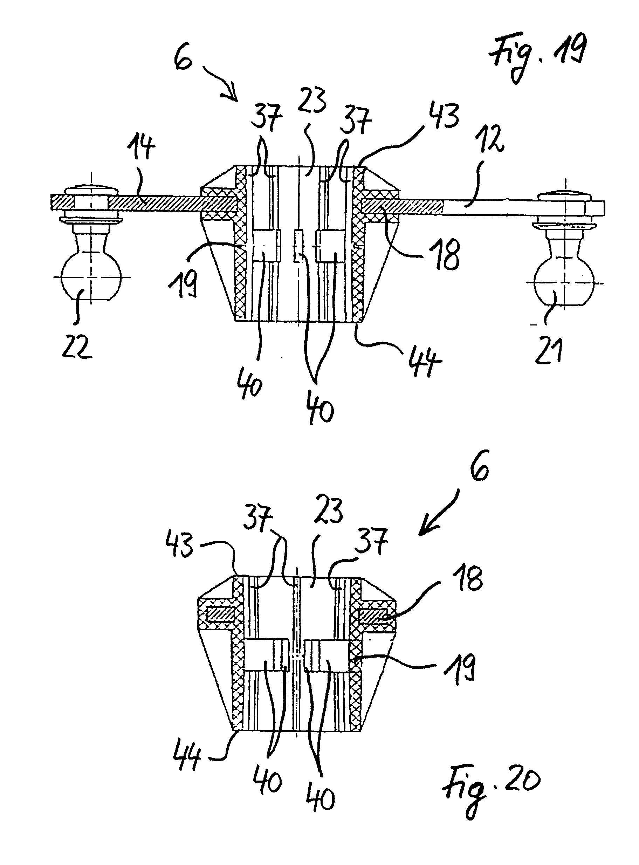

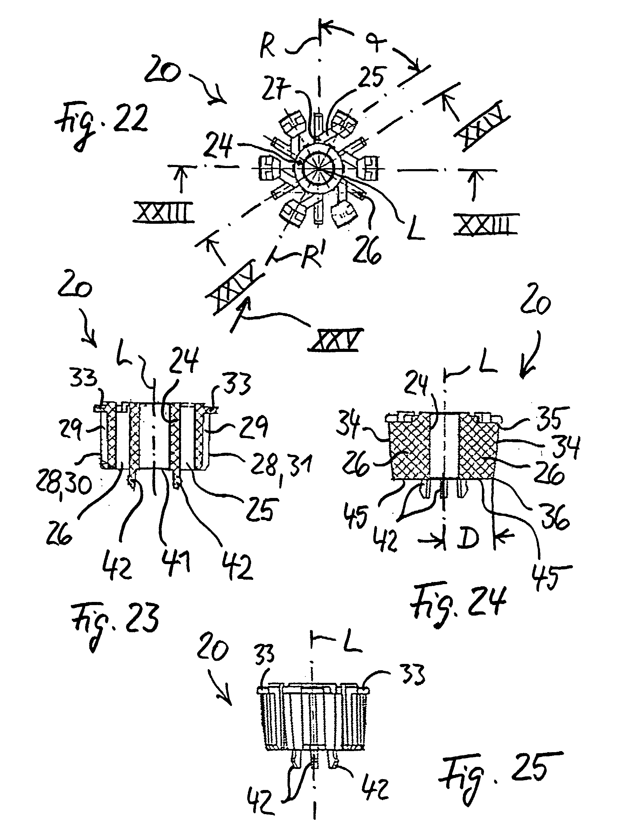

Beim Schwenkhebel 6 nach Fig. 14 bis 20 weist die Nabe 19 einen einzigen Kranz von starren radialen Innenarmen 40 in der Mitte zwischen den beiden Enden der Bohrung 23 der Nabe 19 auf. Die Außenkanten 34 der Anschlagzungen 26 jeder Lagerbuchse 20 gemäß Fig. 21 bis 25 für den Schwenkhebel 6 nach Fig. 14 bis 20 sind jeweils derart konvex gewölbt, daß der Abstand D von der Längsachse L der Innenhülse 24 am oberen Außenkantenende 35 am größten ist und sich zum unteren Außenkantenende 36 hin verringert, wie besonders deutlich aus Fig. 24 hervorgeht. Jede Lagerbuchse 20 ist am unteren Ende 41 der Innenhülse 24 mit einem Kranz von sechs radial federnden Schnapphaken 42 versehen, die um die Längsachse L der Innenhülse 24 herum gleichmäßig verteilt sind und sich in denjenigen Radialebenen R' der Innenhülse 24 erstrecken, welche die mittleren Längsebenen der Außenkanten 28 der Stützzungen 25 bilden, wie Fig. 22 bis 25 verdeutlichen.

Die beiden Lagerbuchsen 20 werden in die Nabe 19 des Schwenkhebels 6 jeweils vom oberen bzw. unteren Ende der Bohrung 23 der Nabe 19 her eingesetzt, so daß sie mit den radialen Außenvorsprüngen 33 der jeweiligen Stützzungen 25 den oberen Rand 43 bzw. den unteren Rand 44 der Bohrung 23 übergreifen und mit dem den eigenen Außenvorsprüngen 33 abgewandten Ende der jeweiligen Innenhülse 24 auf den freien Enden der oberen radialen Innenarme 38 bzw. der unteren radialen Innenarme 39 der Nabe 19 aufliegen bzw. mit den den eigenen Außenvorsprüngen 33 abgewandten Endkanten 45 der jeweiligen Anschlagzungen 26 auf den mittleren radialen Innenarmen 40 der Nabe 19 über je einen federnden O-Ring 46 aufliegen, der zuvor auf den Kranz von radial federnden Schnapphaken 42 der jeweiligen Lagerbuchse 20 aufgesteckt und verrastet worden ist. Die inneren Längsvorsprünge 37 der Nabe 19 greifen in die äußeren Längsnuten 29 der Stützzungen 25 jeder Lagerbuchse 20 ein, so daß die Lagerbuchsen 20 sich in der Bohrung 23 der Nabe 19 nicht drehen können. Die Stützzungen 25 jeder Lagerbuchse 20 liegen mit ihren Außenkanten 28, nämlich deren Längsabschnitten 30 und 31, an der Bohrung 23 der Nabe 19 an. Die Anschlagzungen 26 jeder Lagerbuchse 20 berühren mit ihren Außenkanten 34 die Bohrung 23 der Nabe 19 noch nicht.

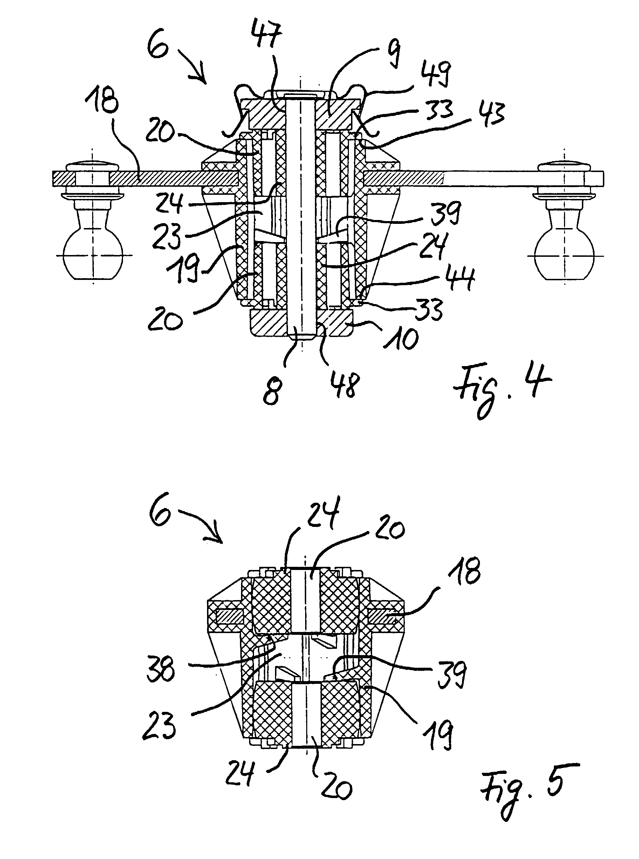

Fig. 4 und 16 verdeutlichen die Montage des Schwenkhebels 6 zwischen den beiden kraftfahrzeugfesten Tragarmen 9, 10 mittels des Lagerbolzens 8. Der Schwenkhebel 6 wird zwischen die Tragarme 9, 10 geschoben und die Innenhülsen 24 seiner Lagerbuchsen 20 werden auf zwei Durchgangsbohrungen 47, 48 im oberen Tragarm 9 bzw. im unteren Tragarm 10 ausgerichtet. Dann wird der Lagerbolzen 8 durch die eine Bohrung 47, die Innenhülsen 24 und die andere Bohrung 48 gesteckt und mittels eines federnden Bügels 49 mit dem oberen Tragarm 9 verrastet. Die beiden Lagerbuchsen 20 sind jeweils zwischen dem oberen Tragarm 9 bzw. dem unteren Tragarm 10 einerseits und der Nabe 19 des Schwenkhebels 6 andererseits, nämlich den oberen federnden Innenarmen 38 bzw. den unteren federnden Innenarmen 39 der Nabe 19 (Fig. 4) bzw. den mittleren Innenarmen 40 der Nabe 19 jeweils über den zugehörigen elastischen O-Ring 46 (Fig. 16), axial eingespannt, so daß jegliches Axialspiel des Schwenkhebels 6 auf dem Lagerbolzen 8 ausgeschlossen ist. Dabei liegen die beiden Lagerbuchsen 20 jeweils nur mit der Innenhülse 24 von verhältnismäßig geringem Außendurchmesser an dem oberen Tragarm 9 bzw. an dem unteren Tragarm 10 an , so daß das Reibmoment zwischen dem Schwenkhebel 6 einerseits und den Tragarmen 9, 10 andererseits trotzdem sehr gering ist. Die Außenvorsprünge 33 der Lagerbuchsen 20 sind lediglich aus Sicherheitsgründen vorgesehen, um außergewöhnlich hohe Schwenkhebelkippkräfte aufzunehmen und bei ihrem Auftreten im Zusammenwirken mit den Tragarmen 9, 10 zu verhindern, daß der Schwenkhebel 6 aus seiner zum Lagerbolzen 8 senkrechten Schwenkebene herausgekippt wird.

Die schräg angeordneten, außen an der Bohrung 23 der Nabe 19 des Schwenkhebels 6 anliegenden, scheibenförmigen Stützzungen 25 jeder der beiden auf dem Lagerbolzen 8 sitzenden Lagerbuchsen 20 wirken aufgrund der ihnen eigenen elastischen Verformbarkeit schwingungsdämpfend. Die radial angeordneten scheibenförmigen Anschlagzungen 26 jeder dieser Lagerbuchsen 20 wirken aufgrund ihrer elastischen Kompressibilität in radialer Richtung und der konvexen Wölbung ihrer Außenkanten 34 progressiv schwingungsdämpfend. Die Außenkanten 34 kommen nämlich progressiv zur Anlage an der Bohrung 23 der Nabe 19 des Schwenkhebels 6. Gemeinsam gewährleisten die Stützzungen 25 und die Anschlagzungen 26 eine wirkungsvolle Schwingungsdämpfung und zugleich eine sehr genaue Übertragung der Axialbewegungen der Schaltstange 5 in Richtung des Doppelpfeils B" über den Schwenkhebel 6 auf die Getriebeschaltwelle 4.

## Patentansprüche

1. Vorrichtung zum Schalten von Kraftfahrzeug- Wechselgetrieben mit einem manuell betätigbaren Schalthebel, welcher mit der Getriebeschaltwelle über ein Gestänge mit einem auf einem kraftfahrzeugfesten Lagerbolzen angeordneten zweiarmigen Schwenkhebel zusammenwirkt, dadurch **gekennzeichnet,** daß der Schwenkhebel (6) mit zwei identischen Lagerbuchsen (20) aus elastischem Material versehen ist, welche in die Bohrung (23) einer Nabe (19) des Schwenkhebels (6) eingesetzt sind und jeweils aufweisen:
a) eine zylindrische Innenhülse (24) zur Aufnahme des Lagerbolzens (8),
b) einen ersten Kranz von scheibenförmigen Stützzungen (25), welche von der Innenhülse (24) schräg abstehen, um jeweils einen spitzen Winkel (a) mit der durch die Zungenwurzel (27) verlaufenden Radialebene (R) der Innenhülse (24) einzuschließen, und welche jeweils mit ihrer zur Längsachse (L) der Innenhülse (24) parallelen Außenkante (28) an der Bohrung (23) der Nabe (19) anliegen, und
c) einen zweiten Kranz von scheibenförmigen Anschlagzungen (26), welche von der Innenhülse (24) radial abstehen und deren Außenkanten (34) jeweils zur progressiven Anlage an der Bohrung (23) der Nabe (19) vom einen Außenkantenende (35) zum anderen Außenkantenende (36) konvex gewölbt sind.

2. Vorrichtung nach Anspruch 1, dadurch **gekennzeichnet,** daß bei jeder Lagerbuchse (20) in der Mitte zwischen den beiden Außenkanten (28) jedes Paares einander benachbarter Stützzungen (25) eine Anschlagzunge (26) vorgesehen ist.

3. Vorrichtung nach Anspruch 2, dadurch **gekennzeichnet,** daß bei jeder Lagerbuchse (20) die Anschlagzungen (26) sich in denjenigen Radialebenen (R) der Innenhülse (24) erstrecken, welche durch die Wurzeln (27) der Stützzungen (25) verlaufen.

4. Vorrichtung nach Anspruch 1, 2 oder 3, dadurch **gekennzeichnet,** daß bei jeder Lagerbuchse (20) die Außenkanten (34) der Anschlagzungen (26) jeweils derart konvex gewölbt sind, daß sich der Abstand (D) von der Längsachse (L) der Innenhülse (24) vom einen Außenkantenende (35) zum anderen Außenkantenende (36) zunächst vergrößert und dann wieder verringert.

5. Vorrichtung nach Anspruch 1, 2 oder 3, dadurch **gekennzeichnet,** daß bei jeder Lagerbuchse (20) die Außenkanten (34) der Anschlagzungen (26) jeweils derart konvex gewölbt sind, daß der Abstand (D) von der Längsachse (L) der Innenhülse (24) am einen Außenkantenende (35) am größten ist und sich zum anderen Außenkantenende (36) hin verringert.

6. Vorrichtung nach einem der vorstehenden Ansprüche, dadurch **gekennzeichnet,** daß bei jeder Lagerbuchse (20) die Stützzungen (25) jeweils an der Außenkante (28) mit einer Längsnut (29) zur Aufnahme eines inneren Längsvorsprungs (37) der Nabe (19) des Schwenkhebels (6) versehen sind.

7. Vorrichtung nach einem der vorstehenden Ansprüche, dadurch **gekennzeichnet,** daß der Schwenkhebel (6) zwischen zwei zueinander parallelen, kraftfahrzeugfesten Tragarmen (9,10) drehbar gelagert ist und die beiden Lagerbuchsen (20) jeweils zwischen der Nabe (19) des Schwenkhebels (6) und dem einen Tragarm (9) bzw. dem anderen Tragarm (10) axial eingespannt sind.

8. Vorrichtung nach Anspruch 7, dadurch **gekennzeichnet,** daß die beiden Lagerbuchsen (20) jeweils auf einem eigenen Kranz von radialen Innenarmen (38 bzw. 39) der Nabe (19) des Schwenkhebels (6) abgestützt sind, welche in Nabenlängsrichtung federn.

9. Vorrichtung nach Anspruch 8, dadurch **gekennzeichnet,** daß die beiden Lagerbuchsen (20) jeweils mit der Innenhülse (24) auf den freien Enden der zugehörigen radialen Innenarme (38 bzw. 39) der Nabe (19) des Schwenkhebels (6) abgestüzt sind.

10. Vorrichtung nach Anspruch 7, dadurch **gekennzeichnet,** daß die beiden Lagerbuchsen (20) jeweils über einen federnden O-Ring (46) auf einem gemeinsamen Kranz von starren radialen Innenarmen (40) der Nabe (19) des Schwenkhebels (6) abgestützt sind.

11. Vorrichtung nach Anspruch 10, dadurch **gekennzeichnet,** daß jede Lagerbuchse (20) an dem dem zugehörigen O-Ring (46) benachbarten Ende der Innenhülse (24) mit einem Kranz von radial federnden Schnapphaken (42) zur Verrastung des aufgesteckten O-Ringes (46) versehen ist.

12. Vorrichtung nach einem der Ansprüche 7 bis 11, dadurch **gekennzeichnet,** daß die beiden Lagerbuchsen (20) jeweils nur mit der Innenhülse (24) an dem einen kraftfahrzeugfesten Tragarm (9) bzw. an dem anderen kraftfahrzeugfesten Tragarm (10) anliegen.

13. Vorrichtung nach Anspruch 12, dadurch **gekennzeichnet,** daß bei jeder Lagerbuchse (20) die Stützzungen (25) an den dem einen kraftfahrzeugfesten Tragarm (9) gegenüberliegenden Enden bzw. an den dem anderen kraftfahrzeugfesten Tragarm (10) gegenüberliegenden Enden jeweils mit einem radialen Außenvorsprung (33) versehen sind, welcher den benachbarten Rand (43 bzw. 44) der Bohrung (23) der Nabe (19) des Schwenkhebels (6) übergreift.

14. Vorrichtung nach einem der vorstehenden Ansprüche, dadurch **gekennzeichnet,** daß die beiden Lagerbuchsen (20) jeweils aus einem thermoplastischen Elastomeren, vorzugsweise einem thermoplastischen Elastomeren auf Polyesterbasis, bestehen.

15. Vorrichtung nach einem der vorstehenden Ansprüche, dadurch **gekennzeichnet,** daß die Nabe (19) des Schwenkhebels (6) aus glasfaserverstärktem Polyamid 66 besteht.

## Claims

1. Device for actuating motor vehicle change speed gearboxes with a manually operated gear lever which co-operates with the gearbox actuating shaft through a linkage having a two-armed pivoting lever mounted on a pivot pin secured on the vehicle bodywork, characterised in that the pivoting lever (6) is provided with two identical bearing bushes (20) of elastic material which are inserted in the bore (23) of a hub (19) of the pivoting lever (6) and each comprise:
a) a cylindrical inner sleeve (24) for receiving the pivot pin (8),
b) a first ring of plate-shaped supporting tongues (25) which project in an inclined direction from the inner sleeve (24) so that each makes an acute angle (a) with the radial plane (R) of the inner sleeve (24) which passes through the root (27) of the tongue, and which each engage with their outer edge (28) parallel to the longitudinal axis (L) of the inner sleeve (24) against the bore (23) of the hub (19), and
(c) a second ring of plate-shaped stop tongues (26) which project radially from the inner sleeve (24) and of which the outer edges (34) are each convexly bulged from one end (35) of the outer edge to the other end (36) of the outer edge for progressive engagement against the bore (23) of the hub (19).

2. Device according to Claim 1, characterised in that a stop tongue (26) is provided in each bearing bush (20) midway between the two outer edges (28) of each pair of mutually adjacent supporting tongues (25).

3. Device according to claim 2, characterised in that in each bearing bush (20) the stop tongues (26) extend in those radial planes (R) of the inner sleeve (24) which pass through the roots (27) of the supporting tongues (25).

4. Device according to claim 1, 2 or 3, characterised in that in each bearing bush (20) the outer edges (34) of the stop tongues (26) are respectively convexly bulged in such a way that the distance (D) from the longitudinal axis (L) of the inner sleeve (24) initially increases and then reduces again from one end (35) of the outer edge to the other end (36) of the outer edge.

5. Device according to claim 1, 2 or 3, characterised in that in each bearing bush (20) the outer edges (34) of the stop tongues (26) are each convexly bulged in such a way that the distance (D) from the longitudinal axis (L) of the inner sleeve (24) is at its greatest at one end (35) of the outer edge and reduces towards the other end (36) of the outer edge.

6. Device according to one of the foregoing claims, characterised in that in each bearing bush (20) the supporting tongues (25) are each provided on the outer edge (28) with a longitudinal groove (29) for receiving an inner longitudinal projection (37) in the hub (19) of the pivoting lever (6).

7. Device according to one of the foregoing claims, characterised in that the pivoting lever (6) is rotatably mounted between two mutually parallel supporting arms (9 , 10) mounted on the vehicle and the two bearing bushes (20) are each axially clamped between the hub (19) of the pivoting lever (6) and the one arm (9) or the other arm (10) respectively.

8. Device according to claim 7, characterised in that the two bearing bushes (20) are each supported by their own ring of radial inner arms (38 or 39) on the hub (19) of the pivoting lever (6), the arms being resilient in the direction of the length of the hub.

9. Device according to claim 8, characterised in that the two bearing bushes (20) are each supported with the inner sleeve (24) on the free ends of the associated radial inner arms (38 or 39) of the hub (19) of the pivoting lever (6).

10. Device according to claim 7, characterised in that the two bearing bushes (20) are each supported through a resilient O-ring (46) on a common ring of rigid radial inner arms (40) of the hub (19) of the pivoting lever (6).

11. Device according to claim 10, characterised in that each bearing bush (20) is provided on the end of the inner sleeve (24) which is adjacent to the associated O-ring (46) with a ring of radially resilient snap hooks (42) for engaging the O-ring (46) which is placed on it.

12. Device according to one of claims 7 to 11, characterised in that the two bearing bushes (20) each engage only with the inner sleeve (24) on the one supporting arm (9) mounted on the vehicle and on the other supporting arm (10) mounted on the vehicle.

13. Device according to claim 12, characterised in that in each bearing bush (20) the supporting tongues (25) are provided, on the ends which lie opposite the one supporting arm (9) mounted on the vehicle and respectively on the ends which lie opposite the other supporting arm (10) mounted on the vehicle, with a respective radial outward projection (33) which engages over the adjacent rim (43 or 44) of the bore (23) in the hub (19) of the pivoting lever (6).

14. Device according to one of the foregoing claims, characterised in that the two bearing bushes (20) are each made of a thermoplastic elastomer, preferably a polyester-based thermoplastic elastomer.

15. Device according to one of the foregoing claims, characterised in that the hub (19) of the pivoting lever (6) is made of glass-fibre-reinforced polyamide 66.

## Revendications

1. Dispositif pour commuter des boîtes de vitesses d'automobiles avec un levier de vitesses pouvant être actionné manuellement, lequel coopère avec l'arbre de transmission par l'intermédiaire d'une tringle avec un levier pivotant à deux bras disposé sur un boulon de support solidaire du véhicule, caractérisé en ce que le levier pivotant (6) est pourvu de deux douilles de support (20) identiques en matériau élastique, qui sont introduites dans l'alésage (23) d'un moyeu (19) du levier pivotant (6) et présentent chacune :
a) une douille intérieure (24) cylindrique destinée à recevoir le boulon de support (8),
b) une première couronne de languettes d'appui (25) en forme de disque qui dépassent en oblique de la douille intérieure (24) et forment chacune un angle aigu (a) avec le plan radial (R) de la douille intérieure (24) passant par la base (27) de la languette, et qui reposent chacune par son bord extérieur (28) parallèle à l'axe longitudinal (L) de la douille intérieure (24) sur l'alésage (23) du moyeu (19), et
c) une deuxième couronne de languettes de butée (26) en forme de disque qui dépassent dans le sens radial de la douille intérieure (24) et dont les bords extérieurs (34) sont recourbés d'une de leurs extrémités (35) à l'autre extrémité (36) en vue d'un appui progressif sur l'alésage (23) du moyeu (19).

2. Dispositif selon la revendication 1, caractérisé en ce qu'une languette de butée (26) est prévue sur chaque douille de support (20) au centre entre les deux bords extérieurs (28) de chaque paire de languettes d'appui (25) voisines.

3. Dispositif selon la revendication 2, caractérisé en ce que les languettes de butée (26) de chaque douille de support (20) s'étendent dans les plans radiaux (R) de la douille intérieure (24) qui passent par les bases (27) des languettes d'appui (25).

4. Dispositif selon la revendication 1, 2 ou 3, caractérisé en ce que les bords extérieurs (34) des languettes de butée (26) de chaque douille de support (20) sont convexes de telle sorte que la distance (D) par rapport à l'axe longitudinal (L) de la douille intérieure (24) commence par augmenter puis diminue d'une extrémité (35) du bord extérieur à son autre extrémité (36).

5. Dispositif selon la revendication 1, 2 ou 3, caractérisé en ce que les bords extérieurs (34) des languettes de butée (26) de chaque douille de support (20) sont convexes de telle sorte que la distance (D) par rapport à l'axe longitudinal (L) de la douille intérieure (24) est maximale à une extrémité (35) du bord extérieur et diminue vers l'autre extrémité (36) du bord extérieur.

6. Dispositif selon l'une quelconque des revendications précédentes, caractérisé en ce que les languettes d'appui (25) de chaque douille de support (20) sont pourvues chacune sur son bord extérieur (28) d'une gorge longitudinale (29) destinée à recevoir une saillie longitudinale intérieure (37) du moyeu (19) du levier pivotant (6).

7. Dispositif selon l'une quelconque des revendications précédentes, caractérisé en ce que le levier pivotant (6) est supporté avec possibilité de rotation entre deux bras de support (9, 10) parallèles et fixés au véhicule à moteur et les deux douilles de support (20) sont fixées chacune dans le sens axial entre le moyeu (19) du levier pivotant (6) et l'un (9) ou l'autre bras de support (10).

8. Dispositif selon la revendication 7, caractérisé en ce que les deux douilles de support (20) s'appuient chacune sur sa propre couronne de bras intérieurs radiaux (38 et 39) du moyeu (19) du levier pivotant (6) qui sont élastiques dans le sens longitudinal du moyeu.

9. Dispositif selon la revendication 8, caractérisé en ce que les deux douilles de support (20) s'appuient chacune avec la douille intérieure (24) sur les extrémités libres des bras intérieurs radiaux (38, 39) correspondants du moyeu (19) du levier pivotant (6).

10. Dispositif selon la revendication 7, caractérisé en ce que les deux douilles de support (20) sont supportées chacune par un joint torique élastique (46) sur une couronne commune de bras intérieurs radiaux rigides (40) du moyeu (19) du levier pivotant (6).

11. Dispositif selon la revendication 10, caractérisé en ce que chaque douille de support (20) est pourvue à l'extrémité de la douille intérieure (24) voisine du joint torique (46) correspondant d'une couronne de crochets d'engagement (42) élastiques dans le sens radial et destinés à s'accrocher au joint torique (46) étendu.

12. Dispositif selon l'une quelconque des revendications 7 à 11, caractérisé en ce que les deux douilles de support (20) reposent chacune seulement par la douille intérieure (24) sur un bras de support (9) ou l'autre bras de support (10) fixés au véhicule.

13. Dispositif selon la revendication 12, caractérisé en ce que les languettes d'appui (25) de chaque douille de support (20) sont pourvues à leurs extrémités faisant face à un bras de support (9) fixé au véhicule ou à l'autre bras de support (10) fixé au véhicule d'une saillie extérieure radiale (33) qui passe par-dessus le bord voisin (43 ou 44) de l'alésage (23) du moyeu (19) du levier pivotant (6).

14. Dispositif selon l'une quelconque des revendications précédentes, caractérisé en ce que les deux douilles de support (20) se composent chacune d'un élastomère thermoplastique, de préférence un élastomère à base de polyester.

15. Dispositif selon l'une quelconque des revendications précédentes, caractérisé en ce que le moyeu (19) du levier pivotant (6) est fait de polyamide 66 armé de fibres de verre.
